(19) Europäisches Patentamt

European Patent Office

Office européen des brevets

(11) **EP 0 658 514 B1**

(12) **EUROPÄISCHE PATENTSCHRIFT**

(45) Veröffentlichungstag und Bekanntmachung des Hinweises auf die Patenterteilung:
**17.06.1998 Patentblatt 1998/25**

(51) Int. Cl.[6]: **C01G 3/02**, C01G 9/02, C01G 51/04, C01G 53/04

(21) Anmeldenummer: **94118925.0**

(22) Anmeldetag: **01.12.1994**

(54) **Verfahren zur Herstellung von Metallhydroxiden**

Process for the preparation of metal hydroxides

Procédé de préparation d'hydroxydes métalliques

(84) Benannte Vertragsstaaten:
**AT BE CH DE ES FR GB IT LI NL SE**

(30) Priorität: **14.12.1993 DE 4342620**

(43) Veröffentlichungstag der Anmeldung:
**21.06.1995 Patentblatt 1995/25**

(73) Patentinhaber:
**H.C. Starck GmbH & Co. KG
38642 Goslar (DE)**

(72) Erfinder:
• **Gutknecht, Wilfried, Dr.
D-38642 Goslar (DE)**
• **Naumann, Dirk, Dr.
D-38667 Bad Harzburg (DE)**

• **Olbrich, Armin, Dr.
D-38723 Seesen (DE)**
• **Richter, Thomas, Dr.
D-38640 Goslar (DE)**
• **Schmoll, Josef, Dr.
D-38642 Goslar (DE)**

(74) Vertreter:
**Steiling, Lothar, Dr. et al
Bayer AG
Konzernbereich RP
Patente und Lizenzen
51368 Leverkusen (DE)**

(56) Entgegenhaltungen:
DE-C- 161 119          US-A- 2 879 137
US-A- 4 395 278

**Beschreibung**

Die vorliegende Erfindung betrifft ein Verfahren zur kontinuierlichen Herstellung von schwerlöslichen Metallhydroxiden der allgemeinen Formel $M^{(x)}(OH)_x$, wobei M = Co, Zn, Ni und/oder Cu und x die Wertigkeit des Metalls bedeuten.

Die Metallhydroxide des Cobalt, Zink, Nickel und Kupfer sind wertvolle Zwischenprodukte für die Herstellung von anorganischen oder organischen Salzen dieser Metalle, für die Herstellung der entsprechenden Oxide oder der reinen Metalle selbst. Aus Cobalthydroxid läßt sich durch Calcinierung ein Cobaltoxid definierter Zusammensetzung z.B. für die Anwendung in der Elektronik für die Herstellung von Varistoren oder in Akkumulatoren herstellen oder durch Reduktion ein Cobaltmetallpulver definierter Partikelgrößenverteilung. Nickelhydroxide dienen als Pigmente oder werden mit verschiedenen Dotierungen und Partikelstrukturen für den Einsatz in Batterien eingesetzt. Zinkhydroxide können als Vorstoffe für Pigmente dienen und die Kupferverbindungen lassen sich in katalytisch aktive Materialien umwandeln.

Bei der Herstellung der Hydroxide für verschiedene Anwendungen steht das Ziel im Vordergrund, möglichst kompaktes und fließfähiges Material für die weitere Verarbeitung herzustellen. Cobaltmetallpulver, hergestellt aus Cobalthydroxid, ergibt durch seine Partikelgrößenverteilung und Partikelstruktur nach seiner Sinterung gemeinsam mit Wolframcarbid z.B. spezielle Hartmetallwerkzeuge.

Für die neuentwickelten Schaumanoden, die insbesondere in Nickelhydridspeicherzellen eingesetzt werden, wird ein Nickelhydroxid benötigt, dessen physikalische Eigenschaften sowohl bezüglich des Anwendungszweckes als auch der angewen Verarbeitungstechnik optimiert sind. Während die Anwendung für Hochleistungsakkumulatoren eine hohe Packungsdichte des aktiven Materials erfordert, verlangt das für Schaumanoden verwendete Pastierungsverfahren ein Material mit hoher Fließfähigkeit, gedrungener Teilchenform, enger Kornverteilung und konstanter Qualität. Ferner soll sich das Produkt gut mit den üblicherweise eingesetzten Zusätzen wie z.B. Cobalt-Metallpulver und Cobaltoxid mischen lassen.

Ein entsprechendes Material und Grundzüge des Herstellungsverfahrens sind in dem Patent JP Hei 4-80513 beschrieben. Nickelhydroxidteilchen mit einem Durchmesser zwischen 1 und 100 μm werden dabei kristallisiert, indem bei einem konstanten pH-Wert und bei konstanter Temperatur kontinuierlich eine Nickelsalzlösung und ein Alkalihydroxid in fester oder flüssiger Form unter intensivem Rühren in ein Reaktionsgefäß geleitet werden. Als günstige Versuchsbedingungen werden ein pH-Wert von 11 und eine Temperatur von 48°C angegeben.

Es ist weiterhin bekannt, däß die Herstellung eines hinreichend kompakten Nickelhydroxids durch Fällung in Gegenwart von Ammoniak oder eines Ammoniumsalzes erfolgen kann. So wird gemäß Trans. Faraday Soc. 51 (1955) 961 aus Nickelnitrat und wäßriger Ammoniaklösung eine Nickelamminkomplexlösung hergestellt, aus der durch Kochen bei gewöhnlichem oder vermindertem Druck oder durch Behandlung mit Wasserdampf ein Nickelhydroxid erhalten wird und das gegenüber den Nickelhydroxiden, die in Abwesenheit von Ammoniak gefällt werden, eine wesentlich geringere spezifische Oberfläche aufweist (13 bis 20 $m^2/g$). Die Herstellung kompakter Nickelhydroxide in Gegenwart von Ammoniak oder einem Ammoniumsalz geht auch aus den Patentanmeldungen JP Sho 53-6119 und JP Sho 61-18107 hervor. In der zuerst genannten Patentanmeldung wird die Fällung von Nickelhydroxid durch Zugabe einer Alkalilauge zu einer entsprechenden Lösung mit einem pH-Wert von mindestens 3,0 beschrieben. Elektrochemische Untersuchungen an dem auf diese Weise hergestellten Material ergaben im Vergleich zu handelsüblichen Nickelhydroxiden besonders hohe spezifische Ladungskapazitäten.

Derartige Produkte erfüllen jedoch noch nicht die oben genannten Anforderungen an Teilchenform, Kornverteilung und Fließfähigkeit.

Wesentliche Merkmale des Verfahrens zur Herstellung eines kompakten Nickelhydroxids und dessen Verwendung in alkalischen Batterien werden in der EP-A 353 837 beschrieben. Eine Nickel(II)-tetramminsalzlösung wird durch Auflösung von Nickelnitrat oder Nickelsulfat in verdünnter Ammoniaklösung hergestellt und durch kontrollierte Zugabe von Natronlauge entsprechend der folgenden Reaktion zersetzt:

$$Ni(NH_3)_4SO_4 + 2\,NaOH \rightarrow Ni(OH)_2 + Na_2SO_4 + 4\,NH_3$$

Die Reaktion läuft bei Temperaturen zwischen 40 und 50°C und im pH-Bereich zwischen 11 und 13 ab. Dabei nimmt das Porenvolumen mit sinkendem pH-Wert ab. Es wird ausdrücklich festgestellt, daß ein porenfreies Produkt nur bei hinreichend geringen Reaktionsgeschwindigkeiten kristallisiert werden kann. Weiterhin hat das nach diesem Verfahren hergestellte Nickelhydroxid eine hohe Kristallinität, eine geringe spezifische Oberfläche, ein geringes Porenvolumen und daher eine hohe physikalische Dichte. Auch die Nachteile dieses Produkts, die auf die hohe Dichte zurückzuführen sind, werden beschrieben. Die geringe spezifische Oberfläche resultiert in einer geringeren Protonenleitfähigkeit und in einer höheren Stromdichte, die die Entstehung des unerwünschten γ-NiOOH, das zur Quellung der Elektrode führt, fördert. Zwar hat das bei niedrigen pH-Werten kristallisierte Nickelhydroxid eine hohe Dichte, doch neigt es stärker zur Bildung von γ-NiOOH. Durch die Wahl eines mittleren pH-Wertes läßt sich ein Kompromiß zwischen der geforderten hohen Dichte und der in gewissem Maße notwendigen Porosität finden. Nach diesem Verfahren wird ein Nickelhydroxid hergestellt, das 3 bis 10 % Zink oder 1 bis 3 % Magnesium in fester Lösung enthält. Diese Dotierungen wirken der Entstehung des $\gamma$-NiOOH entgegen.

Aus dem Patent JP Hei 4-68249 geht ein kontinuierliches Verfahren zur Kristallisation eines Nickelhydroxids mit sphärischer Teilchenform hervor. Dabei werden mittels Dosierpumpen eine Nickelsalzlösung (0,5 bis 3,5 mol/l), verdünnte Alkalilauge (1,25 bis 10 mol/l) und eine Ammoniak- und/oder Ammoniumsalzlösung kontinuierlich unter intensivem Rühren in einen mit einem Überlaufrohr versehenen beheizten zylindrischen Behälter gepumpt, wobei der Ammoniak auch gasförmig eingeleitet werden kann. Die Ammoniakkonzentration wird mit 10 bis 28 Gew.-% und die Ammoniumsalzkonzentration mit 3 bis 7,5 mol/l angegeben. Um das Nickel zu komplexieren, werden zwischen 0,1 und 1,5 mol Ammoniak je Mol Nickelsalzlösung zugeführt. Nach etwa 10 bis 30 Stunden erreicht das System einen stationären Zustand, wonach kontinuierlich ein Produkt mit konstanter Qualität ausgetragen werden kann. Die Verweilzeit im Behälter beträgt zwischen 0,5 und 5 Stunden.

Ein wesentliches Merkmal dieses Verfahrens ist die Durchführung der Reaktion bei einem definierten pH-Wert, der im Bereich zwischen 9 und 12 durch pH-gesteuerte Zufuhr von Alkalilauge auf ± 0,1 pH-Stufen konstant gehalten wird, und bei konstanter Temperatur im Bereich zwischen 20 und 80°C, wobei die Temperaturabweichungen nicht mehr als ± 2 K betragen sollten. Bei diesen Bedingungen werden die kompakten sphärischen Partikel mit einer Teilchengröße zwischen 2 und 50 $\mu$m erhalten. Die Teilchengröße läßt sich insbesondere durch Variation des $NH_3$-Zuflusses, der Verweilzeit und der Rührgeschwindigkeit einstellen. Mit abnehmender Rückgeschwindigkeit bzw. zunehmendem $NH_3$-Zufluß nimmt die Teilchengröße zu. Mit zunehmender Verweilzeit im Behälter wird das Produkt gröber, die Teilchengrößenverteilung enger. Das Kristallisat wird anschließend filtriert, mit Wasser gewaschen und getrocknet. Das nach diesem Verfahren hergestellte Produkt weist die eingangs genannten Eigenschaften auf, wobei es nicht gemahlen zu werden braucht.

In der EP A 462 889 wird ein Verfahren zur Herstellung von Nickelhydroxid offenbart. Dabei liegt der Temperaturbereich der Kristallisation oberhalb 80°C. Es werden mit Cobalt, Cadmium und/oder Zink dotierte Nitrat- oder Sulfatlösungen eingesetzt. Der Cobalt-Gehalt liegt zwischen 1 und 8 Gew.-%, und die Gehalte an Cadmium und/oder Zink betragen zwischen 3 und 10 Gew.-%. Komplexierung erfolgt mit Hilfe eines Ammoniumsalzes, wobei das Molverhältnis $NH_3$/Ni zwischen 0,3 und 0,6 beträgt. Bei diesem Verfahren wird ein pH-Wert von 9,2 ± 0,1 eingehalten. Ferner wird ein dreiflügeliger Rührer, dessen Durchmesser halb so groß wie der Behälterdurchmesser ist und dessen Drehzahl zwischen 300 und 1000 $min^{-1}$ liegt, eingesetzt.

Wie in den bereits beschriebenen Verfahren wird das Produkt filtriert, gewaschen und getrocknet.

In der DE-C-161 119 wird allgemein ein Verfahren zur Herstellung von Nickelhydroxid über die Stufe eines Metallkomplexsalzes offenbart. Es ist jedoch kein Hinweis zu entnehmen, wie ein Anfall von Neutralsalzen, überschüssigen Ammoniaks und Reste von Aminkomplexen vermieden werden können.

Die Nachteile dieser Verfahren sind einerseits die zwangsläufig anfallenden großen Mengen von Neutralsalzen, die bei mindestens der doppelten stöchiometrischen Menge des Nickelhydroxid liegen und als Abwasser vorliegen. Andererseits enthält dieses Abwasser neben geringen Mengen komplex gelösten Nickels noch große Mengen Ammoniak, die entsorgt werden müssen.

Aufgabe dieser Erfindung ist die Bereitstellung eines Verfahrens, welches die Nachteile der beschriebenen Verfahren nicht aufweist.

Erfüllt werden diese Anforderungen durch ein Verfahren zur kontinuierlichen Herstellung von schwerlöslichen Metallhydroxiden der allgemeinen Formel $M^{(x)}(OH)_x$, wobei M = Co, Zn, Ni oder Cu und x die Wertigkeit des Metalls bedeuten, dadurch gekennzeichnet, daß in einem ersten Schritt ein durch anodische Oxidation von Metall erhaltenes Metallhydroxid mit einem Komplexbildner L in Gegenwart von Alkalisalzen AY zum Metallkomplexsalz der allgemeinen Formel $ML_nY_m$ und Alkalilauge umgesetzt und das Metallkomplexsalz in einem zweiten Schritt durch Reaktion mit Alkalilauge bei pH-Werten von >7 zu schwerlöslichen Metallhydroxiden und Komplexbildner und Alkalimetallsalz zersetzt, wobei der Komplexbildner L und das Alkalisalz AY in einem ersten Schritt zurückgeführt werden und die Zersetzung des Metallkomplexsalzes mit in der ersten Stufe gebildeten Alkalilauge vorgenommen wird.

Bevorzugt werden beim erfindungsgemäßen Verfahren als Komplexbildner Ammoniak oder organische Mono- und/oder Diamine mit einer Kettenlänge von 1 bis 6 eingesetzt.

Das erfindungsgemäße Verfahren erlaubt die Vermeidung des Abwasserproblems dadurch, daß als Ausgangsstoffe reaktive Hydroxide der genannten Metalle verwendet werden, die wiederum in eine lösliche Form überführt werden. Dies geschieht durch Komplexierung mit einem geeigneten Komplexbilder wie Ammoniak oder Amine. So läßt sich z.B. Nickelhydroxid mit Hilfe von Ammoniak nahezu vollständig zum Hexamminkomplex in Gegenwart von Neutralsalzen nach folgender Gleichung umsetzen.

$$Ni(OH)_2 + 6\ NH_3 + 2\ NaCl \rightarrow [Ni(NH_3)_6]Cl_2 + 2\ NaOH.$$

Der Feststoff Nickelhexamminchlorid läßt sich leicht durch Filtration oder Dekantieren abtrennen.

Besonders gute Ergebnisse werden erreicht, wenn das erfindungsgemäße Verfahren bei Temperaturen im Bereich von 30 bis 85°C, bevorzugt 45 bis 80°C, durchgeführt wird.

Ein wesentliches Merkmal des erfindungsgemäßen Verfahrens ist, daß das eingesetzte Metallhydroxid in reaktiver Form vorliegt, da es nur dann bei der Komplexierung vollständig aufgelöst wird, welches durch anodische Oxidation von Metall erhalten worden ist.

Ein Verfahren zur Herstellung eines entsprechenden reaktiven Nickelhydroxids wird in der deutschen Patentanmeldung P 4239295.0 offenbart. Hierbei handelt es sich um ein Verfahren zur Herstellung von reinem Nickelhydroxid durch anodische Oxidation von metallischem Nickel in wäßriger Elektrolytlösung in Gegenwart von Sulfationen und Abtrennen des gebildeten Nickelhydroxides, wobei ein chlorid- und sulfathaltiges Nickelhydroxid hergestellt, welches dann durch die Nachbehandlung mit Alkalilaugen zum reinen Nickelhydroxid umgewandelt wird.

Für den Fall, daß beim erfindungsgemäßen Verfahren das reaktive Metallhydroxid Dotierungselemente enthalten soll, wie es z.B. teilweise an Nickelhydroxid für die Herstellung von Batterien gefordert wird, kann das erfindungsgemäße Verfahren in Gegenwart von Cadmium-, Cobalt-, Magnesium-, Calcium- und/oder Zinksalzen durchgeführt werden, wobei diese bevorzugt als Sulfat- und/oder Chloridsalze eingesetzt werden.

Ebenso ist es vorteilhaft möglich, die Herstellung des reaktiven Metallhydrids im Falle der anodischen Oxidation in Gegenwart von Cadmium, Cobalt, Magnesium und/oder Zink durchzuführen, wobei diese Elemente als Metallanoden geschaltet sind.

In einer bevorzugten Ausführungsform des erfindungsgemäßen Verfahrens sind die Metallhydroxide mit einem oder mehreren der Elemente Co, Zn, Mg, Ca und Cd in einer Gesamtmenge bis zu 10 Gew.-% dotiert.

Die beim erfindungsgemäßen Verfahren anfallende Mutterlauge enthält exakt die stöchiometrische Menge Natronlauge, die zur Umsetzung zum kompakten, sphärischen Metallhydroxid erforderlich ist. Somit bietet es sich an, das erfindungsgemäße Verfahren bevorzugt kontinuierlich durchzuführen. Dabei können vorteilhaft auch der Komplexbildner und das Alkalisalz in den ersten Schritt zurückgeführt werden. Die Zersetzung des Metallkomplexsalzes ihrerseits kann mit in der ersten Stufe gebildeten Alkalilauge vorgenommen werden.

Die Umsetzung der Vorstufe erfolgt dann mit hoher Ausbeute und Geschwindigkeit, wenn eine intensive Durchmischung der Komponenten erfolgt.

Besonders vorteilhaft wird die Zersetzung der Metallkomplexsalze in einer stark turbulenten Strömung, die durch intensives Rühren, durch passive oder aktive Mischelemente oder durch Strömungsdüsen erzeugt werden, vorgenommen. Die Zersetzung in einem Reaktor wird bei einer definierten Verweilzeit von 0,5 bis 20 Stunden, bevorzugt von 1 bis 4 Stunden, durchgeführt.

Als besonders vorteilhaft hat sich als Reaktor ein Schlaufenreaktor erwiesen. Die bei der Reaktion zum Metallhydroxid entstehenden Produkte Ammoniak und Kochsalz werden zurück in die erste Stufe geführt und dort wieder zur Herstellung des Metallamminkomplexes verwendet, so daß der gesamte Prozeß abwasserfrei gefahren werden kann.

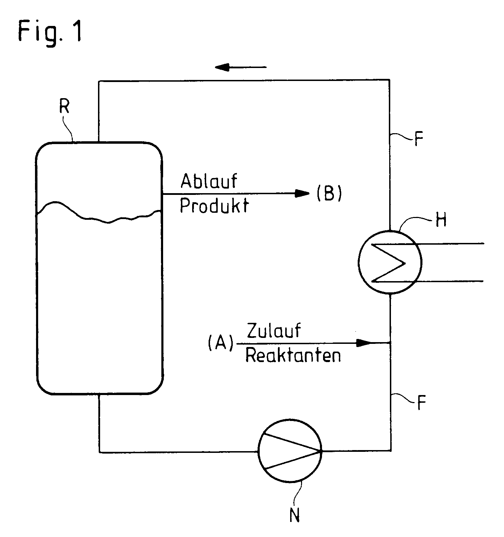

Ein Schlaufenreaktor wird in seiner allgemeinen Ausführungsform im Ullmann, Vol. B4, S. 172-179 beschrieben. Schematisch ist er in Figur 1 dargestellt. Hierin bedeutet A: Zulauf der Reaktanden; B: Ablauf des Produktes. In der Ausführung des Reaktors in einer Schlaufe ist ein kontinuierlicher Betrieb möglich, der sich für die Reaktion der festen Amminkomplexe mit der alkalischen Mutterlauge so für die verschiedenen Metalle durch Wahl der Umlaufgeschwindigkeit einstellen läßt, daß die geforderten physikalischen Eigenschaften der Produkte über die Verweilzeit, Temperatur und pH eingestellt werden können. Ein Rührkessel gegebenen Volumens mit vorgegebenen Rühraggregat läßt sich dagegen nicht so flexibel anpassen, daß in einem Reaktor verschiedene Metallhydroxide unterschiedlicher Morphologie hergestellt werden können. Die Wahl der Umlaufgeschwindigkeit im Schlaufenreaktor und der Einbau verschiedener Mischer wie statische Mischer, aktive In-line Mischer oder Düsen bieten die Gewähr, daß in kürzester Zeit die erforderliche Durchmischung der Reaktanden mit dem Reaktionsmedium erfolgt, wie es mit der Mischintensität in anderen Ausführungsformen eines Reaktionssystems mit der gewünschten Flexibilität nicht möglich ist.

Ein nach dem erfindungsgemäßen Verfahren erhältliches Nickelhydroxid ist besonders für den Einsatz in Schaumanoden geeignet. Seine charakteristischen Kenndaten sind:

- Klopfdichte (ASTM B 212): > 2,0 g/cm$^3$
- spezifische Oberfläche nach BET (DIN 66232): 10 bis 20 m$^2$/g
- mittlere Korngröße D50: 10 bis 20 $\mu$m
- Porosität: 47 bis 53 %
- Quellung in 3-molarer KOH-Lösung: < 10 %
- spezifische Ladungskapazität in einer Schaumanode (AA-Zelle): > 250 mAh/g
- Wassergehalt: < 1 %

Im folgenden wird die Erfindung beispielhaft erläutert, ohne daß hierin eine Einschränkung zu sehen ist.

## Beispiel

### 1. Herstellung eines reaktiven Nickelhydroxids

a) Elektrolyse

Ein Elektrolysereaktor, bestehend aus einer Elektrolysezelle (70 l) wurde mit 200 l Kochsalzlösung (50 g NaCl/l) gefüllt und die Elektrolytlösung mittels einer Kreiselpumpe zwischen beiden Behältern umgepumpt. In die Elektrolysezelle wurden 2 Tantalkörbe eingehängt, deren Seitenflächen als Sieb ausgebildet und mit Ni-Briketts gefüllt waren. Die Tantalkörbe wurden als Anode geschaltet und gegenüber den Seitenflächen wurden als Kathode geschaltete Reinnickelbleche angeordnet, so daß die Gesamtelektrodenfläche 0,5 m$^2$ betrug. Es wurde elektrolysiert mit 4,2 V und 500 A, bei einer Stromdichte von 1000 A/m$^2$. Während der Elektrolyse wurden pro Stunde 200 ml einer Lösung von Nickelsulfat und Cobaltsulfat (250 g NiSO$_4$ · 7H$_2$O/l; 250 g/l CoSO$_4$ · 7H$_2$O) kontinuierlich in die Elektrolysezelle gefördert.

Nach 5 h wurden aus dem Umlaufgefäß kontinuierlich 40 l/h der entstandenen Suspension herausgefördert und gleichzeitig frische Kochsalzlösung in die Elektrolysezelle gepumpt, so daß das Flüssigkeitsvolumen in dem Elektrolysereaktor konstant blieb. Die Suspension wurde anschließend batchweise filtriert und im weiteren Verlauf der Elektrolyse dies Filtrat anstelle der frischen Kochsalzlösung in die Elektrolysezelle zurückgefördert. Somit wurde die zusätzliche Kochsalzlösung nur in der Anfangsphase des kontinuierlichen Betriebes gebraucht, wonach sich dann bei stationärem Betrieb des Reaktors ein geschlossener Kreislauf einstellte. Die Suspension ließ sich gut filtrieren und man erhielt ein gelförmiges Primärprodukt mit einem Wassergehalt von durchschnittlich 90 %. Das hiermit ausgeschleppte Wasser wurde dem System wieder als Waschwasser für das gelförmige Primärprodukt zugeführt. Die chemische Analyse ergab im Durchschnitt einen Sulfatgehalt von 1,8 % und einen Chloridgehalt von 2 % im getrockneten Gel. Die Versuchsdauer betrug insgesamt 105 h.

Während des kontinuierlichen Betriebes wurden in dieser Zeit insgesamt 870 kg gelförmiges Primärprodukt gewonnen.

b) Konditionierung in NaOH

200 kg des feuchten gelförmigen Primärproduktes aus dem Elektrolysereaktor wurden ein einen beheizten Doppelmantelreaktor mit 200 l Wasser durch intensives Rühren fein dispergiert. Anschließend wurde mit NaOH auf pH 13,7 eingestellt und die Suspension unter Rühren auf 80°C erhitzt und 6 h auf dieser Temperatur gehalten.

Danach wurde über die Nutsche filtriert und das Produkt aus der Nutsche mit Wasser gewaschen. Nach dem Trocknen im Trockenschrank erhielt man 19,7 kg Nickelhydroxid mit einem Co-Gehalt von 1 %. Die anionischen Verunreinigungen betrugen weniger als 500 ppm. Die Schüttdichte lag bei 1,3 g/cm$^3$ und die Klopfdichte bei 1,8 g/cm$^3$. Die spezifische BET-Oberfläche (gemessen nach der N$_2$-Einpunkt-Methode) zeigte den sehr hohen Wert von 88 m$^2$/g. Die Halbwertsbreite des (101) Reflexes war 2,0.

**2. Herstellung von Nickelhexamminchlorid**

a) diskontinuierlich mit NH$_3$ (25%ig)

1 l einer Suspension von 100 g/l des elektrolytisch gemäß Beispiel 1 gewonnenen hochaktiven Nickelhydroxid-Gels und 280 g/l Kochsalz wurde mit 1 kg Ammoniak (25%ig) versetzt und unter Kühlung 1 h gerührt. Die Reaktionsmischung wurde über eine Labornutsche abgesaugt und portionsweise mit wenig NH$_3$ konz. nachgewaschen. Man erhielt 226 g [Ni(NH$_3$)$_6$]Cl$_2$ mit einer Ausbeute von 90,5 %.

Die Mutterlauge enthielt 9,5 g komplex gebundenes Nickelhydroxid, sowie 78 g NaOH und überschüssigen Ammoniak.

Der überschüssige Ammoniak wurde über eine kurze Füllkörperkolonne als 25%ige wäßrige Lösung abdestilliert.

Hierbei fielen als gut sedimentierendes und filtrierbares Produkt die 9,5 g komplex gebundenes Nickelhydroxid aus. Nach Filtration und Nachwaschen mit wenig Wasser erhielt man 1,5 l Filtrat mit 280 g NaCl (3,2 M) und 78 g NaOH (1,3 M).

b) kontinuierlich mit NH$_3$ (25%ig)

In ein 2 l Becherglas mit Überlauf wurde unter Rühren und Kühlung kontinuierlich 0,5 l/h einer Suspension von 100 g/l hochaktivem Nickelhydroxid-Gel und 280 g/l NaCl, sowie 0,5 l Ammoniak (25%ig) gepumpt. Der Überlauf wurde über ein Tauchrohr in einen Aufstromklassierer geleitet, in dem das gebildete Nickelhexamminchlorid sedimentierte. Das aus dem Aufstromklassierer ablaufende Filtrat enthielt 2 g/l komplex gebundenes Nickelhydroxid und 40 g/l Natronlauge, sowie 140 g/l NaCl und überschüssigen Ammoniak. Dies entspricht bei einer mittleren Verweilzeit von 4 h einem Umsetzungsgrad des hochaktiven Nickelhydroxid-Gels zu Nickelhexamminchlorid von 92 %. 1 l des Filtrates mit 190 g/l NaCl, 40 g/l NH$_3$ wurde wie in Abs. a1) über eine kurze Füllkörperkolonne aufbereitet. Man erhielt 25%igen Ammoniak als Kondensat, sowie nach Abtrennung des ausgefallenen Nickelhydroxides 700 ml Prozeßlauge mit 140 g NaCl (3,4 M) und 40 g NaOH (1,4 M).

c) kontinuierlich mit NH$_3$ (50%ig) als Brüden

Die Umsetzung von hochaktivem Nickelhydroxid-Gel und Kochsalz mit Ammoniak wurde kontinuierlich in einem gekühlten 10-l- Treibstrahlreaktor durchgeführt.

Ammoniak wurde aus verdünnten Prozeßlösungen durch Verdampfung über eine Füllkörperkolonne gewonnen und direkt ohne vorherige Kondensation als 50%iges NH$_3$/H$_2$O-Dampfgemisch dem Treibstrahlreaktor zugeführt. In den Treibstrahlreaktor wurden kontinuierlich 3 l/h einer Suspension von 100 g/l hochaktivem Nickelhydroxid-Gel mit 280 g/l Kochsalz sowie 600 g/h NH$_3$ und 600 g/h H$_2$O als Brüdengemisch geleitet. Der Überlauf des Treibstrahlreaktors war über ein Tauchrohr an einen Aufstromklassierer angeschlossen, in dem das gebildete Nickelhexamminchlorid sedimentierte. Das ablaufende klare Filtrat (4 l/h) enthielt 3 g/l komplex gebundenes Nickelhydroxid, 210 g NaCl, 49 g NaOH und 70 g/l $NH_3$. Dies entspricht einem Umsetzungsgrad von 96 %.

**3. Herstellung von kompaktem Nickelhydroxid**

a) kontinuierlich im 5-l-Durchflußrührkessel-Reaktor

Eine dickflüssige Suspension von Nickelhexamminchlorid (400 g auf 600 g $NH_3$ 7%ig) wurde durch Rühren in einen Vorratsbehälter pumpfähig gehalten. Von dieser Suspension wurden 500 g/h kontinuierlich in einen auf 70°C beheizten 5 l-Durchflußrührkessel-Reaktor gepumpt. Als zweite Komponente wurden pH-geregelte ca. 1,2 l/h Prozeßlauge mit 60 g/l NaOH und 140 g/l NaCl zudosiert.

Die mittlere Verweilzeit im Reaktor betrug ungefähr 3 h. Nach 21 h wurde aus der ablaufenden Suspension nach Filtration und Waschen mit $H_2O$ ein kompaktes, sehr gut filtrierbares Nickelhydroxid mit einer Fülldichte von 1,6 g/cm$^3$ gewonnen.

b) kontinuierlich im 100 l-Treibstrahlreaktor

Für die Umsetzung von Nickelhexamminchlorid und Natronlauge zu kompaktem Nickelhydroxid wurde ein Treibstrahlreaktor verwendet, in dem über Mischdüsen und eine Hochleistungsumwälzpumpe optimale Durchmischung der Reaktionspartner und Erzeugung hoher Scherkräfte gewährleistet wurde. In einem Vorratsbehälter wurde eine Suspension von 400 g Nickelhexamminchlorid auf 600 g $NH_3$ 7%ig durch Rühren pumpfähig gehalten. 20 kg/h dieser Suspension wurden über eine Schlauchpumpe in den Treibstrahlreaktor gefördert, der auf einer Temperatur von 73°C gehalten wurde. Als Reaktionskomponente wurden ca. 43 l/h Prozeßlauge mit 65 g/l NaOH und 200 g/l NaCl kontinuierlich zugefördert. Die Dosierung der Prozeßlauge erfolgte pH-geregelt, wobei der pH zwischen 11,4 und 11,6 gehalten wurde. Die mittlere Verweilzeit betrug durchschnittlich ca. 1,6 h.

Nach 16 h wurde aus dem Überlauf des Treibstrahlreaktors ein sehr schnell sedimentierendes kompaktes Nickelhydroxid erhalten, welches außerordentlich gut filtrierbar war und mit ca. 7 l/kg warmem Wasser auf Chloridgehalte < 500 ppm ausgewaschen werden konnte. Die Fülldichte des Nickelhydroxids betrug durchschnittlich 1,9 g/cm$^3$ und die Klopfdichte 2,1 g/cm$^3$. Die mittlere Korngröße der kugelförmigen Partikel betrug durchschnittlich 12 $\mu$m.

**Patentansprüche**

1. Verfahren zur kontinuierlichen Herstellung von schwerlöslichen Metallhydroxiden der allgemeinen Formel $M^{(x)}(OH)_x$, wobei M = Co, Zn, Ni oder Cu und x die Wertigkeit des Metalls bedeuten, dadurch gekennzeichnet, daß in einem ersten Schritt ein durch anodische Oxidation von Metall erhaltenes Metallhydroxid mit einem Komplexbildner L in Gegenwart von Alkalisalzen AY zum Metallkomplexsalz der allgemeinen Formel $ML_nY_m$ und Alkalilauge umgesetzt und das Metallkomplexsalz in einem zweiten Schritt durch Reaktion mit Alkalilauge bei pH-Werten von > 7 zu schwerlöslichen Metallhydroxiden und Komplexbildner und Alkalimetallsalz zersetzt, wobei der Komplexbildner L und das Alkalisalz AY in einem ersten Schritt zurückgeführt werden und die Zersetzung des Metallkomplexsalzes mit in der ersten Stufe gebildeten Alkalilauge vorgenommen wird.

2. Verfahren gemäß Anspruch 1, dadurch gekennzeichnet, daß als Komplexbildner Ammoniak oder organische Mono- und/oder Diamine mit einer Kettenlänge von 1 bis 6 eingesetzt werden.

3. Verfahren gemäß einem der Ansprüche 1 oder 2, dadurch gekennzeichnet, daß die Metallhydroxide mit einem oder mehreren der Elemente Co, Zn, Mg, Ca und Cd in einer Gesamtmenge bis zu 10 Gew.-% dotiert sind.

4. Verfahren gemäß einem oder mehreren der Ansprüche 1 bis 3, dadurch gekennzeichnet, daß es bei Temperaturen im Bereich von 30 bis 85°C, bevorzugt 45 bis 80°C, durchgeführt wird.

5. Verfahren gemäß einem oder mehreren der Ansprüche 1 bis 4, dadurch gekennzeichnet, daß die Zersetzung der Metallkomplexsalze in einer stark turbulenten Strömung, die durch intensives Rühren, durch passive oder aktive Mischelemente oder durch Strömungsdüsen erzeugt werden, vorgenommen wird.

6. Verfahren gemäß einem oder mehreren der Ansprüche 1 bis 5, dadurch gekennzeichnet, daß die Zersetzung in einem Reaktor bei einer definierten Verweilzeit von 0,5 bis 10 Stunden, bevorzugt von 1 bis 4 Stunden durchgeführt wird.

7. Verfahren gemäß einem oder mehreren der Ansprüche 1 bis 6, dadurch gekennzeichnet, daß die Herstellung in einem Schlaufenreaktor erfolgt.

**Claims**

1. A process for the continuous production of sparingly soluble metal hydroxides corresponding to the general formula $M^{(x)}(OH)_x$, wherein M is Co, Zn, Ni or Cu and x denotes the valency of the metal, characterised in that in a first step a metal hydroxide obtained by anodic oxidation of metal is reacted with a complexing agent L in the presence of alkali metal salts AY to form metal complex salt corresponding to the general formula $ML_nY_m$ and lye, and in a second step the metal complex salt, by reaction with lye at pH values of > 7, is decomposed into sparingly soluble metal hydroxides and complexing agent and alkali metal salt, the complexing agent L and the alkali metal salt AY being returned to a first step and the decomposition of the metal complex salt being effected using the lye formed in the first step.

2. A process according to claim 1, characterised in that ammonia or organic monoamines and/or diamines having a chain length of from 1 to 6 are used as complexing agent.

3. A process according to one of claims 1 or 2, characterised in that the metal hydroxides are doped with one or more of the elements Co, Zn, Mg, Ca and Cd in a total quantity of up to 10 wt.%.

4. A process according to one or more of claims 1 to 3, characterised in that it is carried out at temperatures within the range of 30°C to 85°C, preferably 45°C to 80°C.

5. A process according to one or more of claims 1 to 4, characterised in that the decomposition of the metal complex salts is effected in a highly turbulent flow, which is produced by intensive stirring, by passive or active mixing units or by flow nozzles.

6. A process according to one or more of claims 1 to 5, characterised in that the decomposition is carried out in a reactor for a defined residence time of from 0.5 to 10 hours, preferably from 1 to 4 hours.

7. A process according to one or more of claims 1 to 6, characterised in that the production is carried out in a loop reactor.

**Revendications**

1. Procédé pour la préparation en continu d'hydroxydes métalliques difficilement solubles répondant à la formule générale $M^{(x)}(OH)_x$ où M = Co, Zn, Ni ou Cu et x représente la valence du métal, caractérisé en ce que, dans une première étape, on fait réagir un hydroxyde métallique, obtenu par oxydation anodique du métal, avec un formateur de complexe L en présence de sels de métaux alcalins AY pour obtenir le sel complexe de métal répondant à la formule générale $ML_nY_m$ et un alcali et, dans une deuxième étape, on décompose le sel complexe de métal par réaction avec un alcali à des valeurs de pH > 7 pour obtenir des hydroxydes métalliques difficilement solubles, des formateurs de complexes et un sel de métal alcalin, le formateur de complexe L et le sel de métal alcalin AY étant recyclés dans la première étape et la décomposition du sel complexe de métal ayant lieu avec l'alcali obtenu dans la première étape.

2. Procédé selon la revendication 1, caractérisé en ce qu'on met en oeuvre, à titre de formateur de complexe, de l'ammoniac ou des mono- et/ou diamines organiques possédant une longueur de chaîne de 1 à 6.

3. Procédé selon l'une quelconque des revendications 1 ou 2, caractérisé en ce qu'on dope les hydroxydes métalliques avec un ou plusieurs éléments choisis parmi Co, Zn, Mg, Ca et Cd, en une quantité totale allant jusqu'à 10 % en poids.

4. Procédé selon une ou plusieurs des revendications 1 à 3, caractérisé en ce qu'on l'effectue à des températures dans le domaine 30 à 85°C, de préférence de 45 à 80°C.

5. Procédé selon une ou plusieurs des revendications 1 à 4, caractérisé en ce qu'on procède à la décomposition des sels complexes de métaux dans un courant à forte turbulence que l'on crée par agitation vigoureuse, via des éléments de mélange passifs ou actifs ou encore via des tuyères d'écoulement.

6. Procédé selon une ou plusieurs des revendications 1 à 5, caractérisé en ce qu'on effectue la décomposition dans un réacteur avec un temps de séjour défini de 0,5 à 10 heures, de préférence de 1 à 4 heures.

7. Procédé selon une ou plusieurs des revendications 1 à 6, caractérisé en ce que la préparation a lieu dans un réacteur en boucle.

# Fig. 1